(19) **Europäisches Patentamt European Patent Office Office européen des brevets**

(11) **EP 3 062 574 B1**

(12) **EUROPEAN PATENT SPECIFICATION**

(45) Date of publication and mention of the grant of the patent:
**09.12.2020 Bulletin 2020/50**

(51) Int Cl.:
***H04W 72/12*** *(2009.01)*

(21) Application number: **14801329.5**

(22) Date of filing: **27.05.2014**

(86) International application number:
**PCT/CN2014/078559**

(87) International publication number:
**WO 2014/187377 (27.11.2014 Gazette 2014/48)**

(54) **HSDPA RESOURCE SCHEDULING METHOD AND APPARATUS**

HSDPA-RESSOURCENPLANUNGSVERFAHREN UND -VORRICHTUNG

PROCÉDÉ ET APPAREIL DE PLANIFICATION DE RESSOURCES HSDPA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2013 CN 201310495831**

(43) Date of publication of application:
**31.08.2016 Bulletin 2016/35**

(73) Proprietor: **ZTE Corporation Shenzhen, Guangdong 518057 (CN)**

(72) Inventors:
* **ZHAN, Xinsheng**
  **Shenzhen**
  **Guangdong 518057 (CN)**
* **SONG, Tingshan**
  **Shenzhen**
  **Guangdong 518057 (CN)**
* **SUN, Yi**
  **Shenzhen**
  **Guangdong 518057 (CN)**
* **HE, Rui**
  **Shenzhen**
  **Guangdong 518057 (CN)**
* **DU, Juan**
  **Shenzhen**
  **Guangdong 518057 (CN)**
* **NIE, Guotao**
  **Shenzhen**
  **Guangdong 518057 (CN)**

(74) Representative: **Mozzi, Matteo et al Jacobacci & Partners S.p.A. Via Senato, 8 20121 Milano (IT)**

(56) References cited:
**CN-A- 1 925 460     CN-A- 1 933 363
CN-A- 101 442 780    CN-A- 102 083 221
CN-A- 102 413 570    CN-C- 100 550 691**

* **SAJID MUSHTAQ M ET AL: "QoS-Aware LTE Downlink Scheduler for VoIP with Power Saving", COMPUTATIONAL SCIENCE AND ENGINEERING (CSE), 2012 IEEE 15TH INTERNATIONAL CONFERENCE ON, IEEE, 5 December 2012 (2012-12-05), pages 243-250, XP032315128, DOI: 10.1109/ICCSE.2012.41 ISBN: 978-1-4673-5165-2**
* **BIN CHEN ET AL: "A novel multi-service scheduling scheme for e-utra", INTERNET, 2007. ICI 2007. 3RD IEEE/IFIP INTERNATIONAL CONFERENCE IN CENTRAL ASIA ON, IEEE, PISCATAWAY, NJ, USA, 1 September 2007 (2007-09-01), pages 1-5, XP031189739, ISBN: 978-1-4244-1007-1**

## Description

## Technical Field

The present disclosure relates to the field of mobile communications, particularly to a method and device for scheduling a High Speed Downlink Packet Access (HSDPA) resource.

## Background

In a commercial system, a Proportional Fair (PF) algorithm is generally adopted for a High Speed Downlink Packet Access (HSDPA) service to schedule each User Equipment (UE), wherein a Channel Quality Indicator (CQI) and a history throughput are generally considered in the PF algorithm, and the core of the PF algorithm is a method for calculating a scheduling priority. Generally, a formula for calculating the scheduling priority is as follows:

$$ P_k = \frac{C_k(t)}{T_k(t)}, $$

where $P_k$ represents a scheduling priority of a $k^{th}$ UE, $C_k(t)$ represents a data rate (which may be considered as a theoretical calculated rate) that may be reached by the $k^{th}$ UE at a moment $t$ and is mainly determined by a CQI, and $T_k(t)$ represents a history throughput of the $k^{th}$ UE accumulated at the moment $t$. Thus, it may be seen in the same channel condition that a user having a relatively small history throughput has a higher scheduling priority, while a user of a service with a large amount of data, which has a relatively large history throughput, has a lower scheduling priority.

Two aspects including a cell throughput and user fairness are substantially balanced during a scheduling process by balanced consideration of two factors in the PF algorithm including channel quality and a history throughput accumulated by a user currently. However, since the user fairness mainly depends on such a factor as the history throughput accumulated by the user currently, the algorithm can only ensure long-term fairness (that is to say, users have a substantially equal average rate within a relatively long period of time), but fails to ensure the user fairness within a relatively short period of time.

It is learned from statistics of the commercial system that a user of a service with a small amount of data has an extremely high scheduling priority by using a current scheduling priority algorithm and there is a large number of services with a small amount of data in networks with a moderate load and a high load. In this case, it is much less possible to schedule a user, such as a File Transfer Protocol (FTP) user of a service with a larger amount of data.

To sum up, an existing method for scheduling the resource fails to satisfy service requirements of some special users, such as a user of a service with a large amount of data, while balancing a throughput and user fairness. Document SAJID MUSHTAQ M ET AL: "QoS-Aware LTE Downlink Scheduler for VoIP with Power Saving", COMPUTATIONAL SCIENCE AND ENGINEERING (CSE), 2012 IEEE 15TH INTERNATIONAL CONFERENCE ON, IEEE, 5 December 2012, discloses a QoS-Aware LTE Scheduler for VoIP with Power Saving improving the QoS for multimedia services in relation with use of the power saving scheme at the UE.

Document (BIN CHEN ET AL: "A novel multi-service scheduling scheme for e-utra", INTERNET, 2007. ICI 2007. 3RD IEEE/IFIP INTERNATIONAL CONFERENCE IN CENTRAL ASIA ON, IEEE, PISCATAWAY, NJ, USA, 1 September 2007, relates to a multi-service scheduling scheme for E-UTRA. Z

## Summary

The invention relates to a method and an apparatus as set forth in the appended claims.

The technical problem to be solved by embodiments of the present disclosure is to provide a method and device for scheduling an HSDPA resource, which can improve service experience of a user of a service with a large amount of data, so as to finally achieve an objective of balancing a throughput and real-time fairness of the user.

The embodiments of the present disclosure provide the following technical solution so as to solve the technical problem above.

According to an aspect of the present disclosure, a method for scheduling a High Speed Downlink Packet Access, HSDPA, resource is provided, including: respectively acquiring weight values of three parameters of User Equipment, UE, wherein the three parameters are a theoretical data rate, a history throughput, and an amount of data in a data buffer; calculating a scheduling priority of the UE according to the weight values of the three parameters; and scheduling the UE according to the scheduling priority of the UE.

In an example embodiment of the present disclosure, respectively acquiring the weight values of the three parameters of the UE, wherein the three parameters are the theoretical data rate, the history throughput, and the amount of the data in the data buffer includes: acquiring a Channel Quality Indicator, CQI, reported by the UE; calculating the theoretical data rate of the UE according to the CQI and a terminal capability of the UE; and normalizing the calculated theoretical data rate into a weight value between 0 and 1000.

In an example of the present disclosure, respectively acquiring the weight values of the three parameters of the UE, wherein the three parameters are the theoretical data rate, the history throughput, and the amount of the data in the data buffer includes: acquiring the history throughput of the UE; and normalizing the history throughput into a weight value between 0 and 100.

In an example of the present disclosure, respectively acquiring the weight values of the three parameters of the UE, wherein the three parameters are the theoretical data rate, the history throughput, and the amount of the data in the data buffer includes: acquiring an amount of data of a to-be-scheduled data buffer of the UE; and normalizing the amount of the data into a weight value between 0 and 100.

In an example of the present disclosure, calculating the scheduling priority of the UE according to the weight values of the three parameters includes: calculating the scheduling priority P of the UE according to the weight values of the three parameters by using a following formula:

$$P_k = \frac{C_k(t)}{T_k(t)} * f(buffer),$$

where $P_k$ represents a scheduling priority of a $k^{th}$ UE, $C_k(t)$ represents a theoretical data rate of the $k^{th}$ UE at a moment $t$, $T_k(t)$ represents a history throughput of the $k^{th}$ UE accumulated at the moment $t$, and $f(buffer)$ represents an amount of data in a data buffer of the $k^{th}$ UE.

According to another aspect of the present disclosure, a device for scheduling a High Speed Downlink Packet Access, HSDPA, resource is provided, including: an information acquiring component, configured to respectively acquire weight values of three parameters of User Equipment, UE, wherein the three parameters are a theoretical data rate, a history throughput, and an amount of data in a data buffer; a scheduling priority calculating component, configured to calculate a scheduling priority of the UE according to the weight values of the three parameters; and a resource allocating component, configured to schedule the UE according to the scheduling priority of the UE.

In an example of the present disclosure, the information acquiring component includes: a first acquiring sub-component, configured to acquire a Channel Quality Indicator, CQI, reported by the UE; calculate the theoretical data rate of the UE according to the CQI and a terminal capability of the UE; and normalize the calculated theoretical data rate into a weight value between 0 and 1000.

In an example of the present disclosure, the information acquiring component includes: a second acquiring sub-component, configured to acquire the history throughput of the UE; and normalize the history throughput into a weight value between 0 and 100.

In an example of the present disclosure, the information acquiring component includes: a third acquiring sub-component, configured to acquire an amount of data of a to-be-scheduled data buffer of the UE; and normalize the amount of the data into a weight value between 0 and 100.

In an example of the present disclosure, the scheduling priority calculating component is configured to calculate the scheduling priority P of the UE according to the weight values of the three parameters by using a

$$P_k = \frac{C_k(t)}{T_k(t)} * f(buffer),$$

following formula: where $P_k$ represents a scheduling priority of a $k^{th}$ UE, $C_k(t)$ represents a theoretical data rate of the $k^{th}$ UE at a moment $t$, $T_k(t)$ represents a history throughput of the $k^{th}$ UE accumulated at the moment $t$, and $f(buffer)$ represents an amount of data in a data buffer of the $k^{th}$ UE.

The embodiments of the present disclosure bring the following beneficial effect:

In the solution above, a scheduling priority of UE is calculated according to weight values of three parameters of the UE, wherein the three parameters are a theoretical data rate, a history throughput, and an amount of data in a data buffer, thus scheduling priorities of a service with a large amount of data and a service with a small amount of data may be better adjusted so that it is more possible to schedule a user of the service with a large amount of data, thereby improving service experience of the user of the service with a large amount of data and finally achieving an objective of balancing a throughput and real-time fairness of the user.

## Brief Description of the Drawings

Fig. 1 is a flowchart of a method for scheduling an HSDPA resource according to an embodiment of the present disclosure; and
Fig. 2 is a structural diagram of a device for scheduling an HSDPA resource according to an embodiment of the present disclosure.

## Detailed Description of the Embodiments

Detailed description will be provided hereinafter with in combination with the accompanying drawings and specific embodiments so that the technical problem to be solved by the embodiments of the present disclosure, and the technical solution and advantages of the present disclosure are clearer.

The embodiments of the present disclosure provide a method and device for scheduling an HSDPA resource, so as to solve the problem that it is less possible to schedule a user of a service with a large amount of data in the related art, thus greatly improving user experience of the user of the service with a large amount of data, and finally achieving an objective of balancing a throughput and real-time fairness of the user.

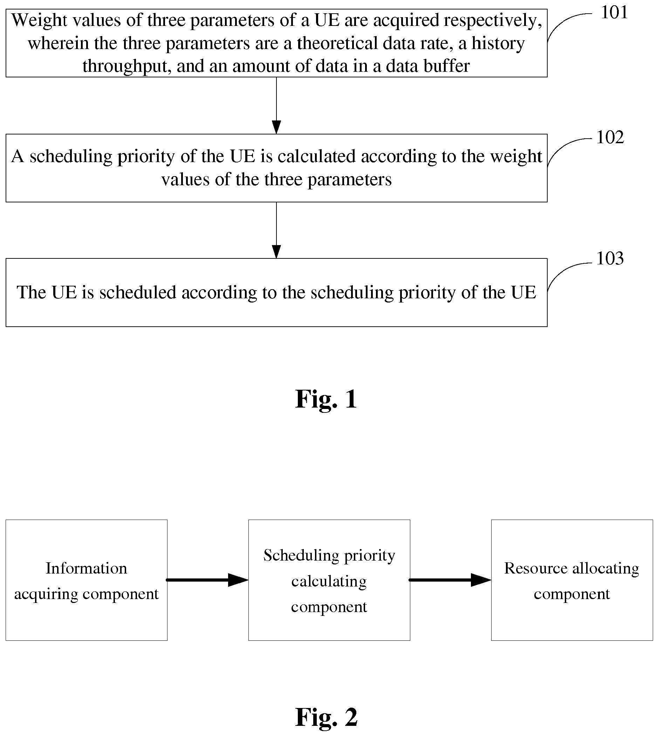

Fig. 1 is a flowchart of a method for scheduling an HSDPA resource according to an embodiment of the present disclosure. As shown in Fig. 1, the present embodiment includes:

Step 101: Weight values of three parameters of a UE are acquired respectively, wherein the parameters are a theoretical data rate, a history throughput, and an amount of data in a data buffer;

Step 102: A scheduling priority of the UE is calculated according to the weight values of the three parameters;

Step 103: The UE is scheduled according to the scheduling priority of the UE.

According to the method for scheduling the HSDPA resource of the present disclosure, the scheduling priority of a UE is calculated according to weight values of three parameters of the UE, wherein the three parameters are a theoretical data rate, a history throughput, and an amount of data in a data buffer, thus scheduling priorities of a service with a large amount of data and a service with a small amount of data may be better adjusted so that it is more possible to schedule a user of the service with a large amount of data, thereby improving service experience of the user of the service with a large amount of data and finally achieving an objective of balancing a throughput and real-time fairness of the user.

In another example embodiment of the present disclosure, on the basis that Step 101 to Step 103 are included, that the weight values of the three parameters of the UE, namely the theoretical data rate, the history throughput, and the amount of the data in the data buffer, are acquired respectively includes that: a CQI reported by the UE is acquired; the theoretical data rate of the UE is calculated according to the CQI and a terminal capability of the UE; and the calculated theoretical data rate is normalized into a weight value between 0 and 1000.

In another example embodiment of the present disclosure, on the basis that Step 101 to Step 103 are included, that the weight values of the three parameters of the UE, namely the theoretical data rate, the history throughput, and the amount of the data in the data buffer, are acquired respectively includes that: the history throughput of the UE is acquired; and the history throughput is normalized into a weight value between 0 and 100.

In another example embodiment of the present disclosure, on the basis that Step 101 to Step 103 are included, that the weight values of the three parameters of the UE, namely the theoretical data rate, the history throughput, and the amount of the data in the data buffer, are acquired respectively includes that: an amount of data of a to-be-scheduled data buffer of the UE is acquired; and the amount of the data is normalized into a weight value between 0 and 100.

In another example embodiment of the present disclosure, on the basis that Step 101 to Step 103 are included, that the scheduling priority of the UE is calculated according to the weight values of the three parameters includes that: the scheduling priority $P$ of the UE is calculated according to the weight values of the three parameters by using a following formula:

$$ P_k = \frac{C_k(t)}{T_k(t)} * f(buffer) , $$

where $P_k$ represents a scheduling priority of a $k^{th}$ UE, $C_k(t)$ represents a theoretical data rate of the $k^{th}$ UE at a moment $t$, $T_k(t)$ represents a history throughput of the $k^{th}$ UE accumulated at the moment $t$, and $f(buffer)$ represents an amount of data in a data buffer of the $k^{th}$ UE.

An embodiment of the present disclosure further provides a device for scheduling an HSDPA resource. As shown in Fig. 2, the present embodiment includes:

an information acquiring component, configured to respectively acquire weight values of three parameters of UE, wherein the three parameters are a theoretical data rate, a history throughput, and an amount of data in a data buffer;

a scheduling priority calculating component, configured to calculate a scheduling priority of the UE according to the weight values of the three parameters; and

a resource allocating component, configured to schedule the UE according to the scheduling priority of the UE.

According to the device for scheduling the HSDPA resource of the present disclosure, the scheduling priority of the UE is calculated according to the weight values of the three parameters of the UE, wherein the three parameters are the theoretical data rate, the history throughput, and the amount of the data in the data buffer, thus scheduling priorities of the service with a large amount of data and the service with a small amount of data may be better adjusted so that it is more possible to schedule the user of the service with a large amount of data, thereby improving service experience of the user of the service with a large amount of data and finally achieving an objective of balancing a throughput and real-time fairness of the user.

In an example embodiment, the information acquiring component includes: a first acquiring sub-component, configured to acquire a CQI reported by the UE; calculate the theoretical data rate of the UE according to the CQI and a terminal capability of the UE; and normalize the calculated theoretical data rate into a weight value between 0 and 1000.

In an example embodiment, the information acquiring component includes: a second acquiring sub-component, configured to acquire the history throughput of the UE; and normalize the history throughput into a weight value between 0 and 100.

In an example embodiment, the information acquiring component includes:

a third acquiring sub-component, configured to acquire an amount of data of a to-be-scheduled data buffer of the UE; and normalize the amount of the data into a weight value between 0 and 100.

In an example embodiment, the scheduling priority calculating component is configured to calculate the scheduling priority $P$ of the UE according to the weight values of the three parameters by using a following formula:

$$P_k = \frac{C_k(t)}{T_k(t)} * f(buffer) \, ,$$

where $P_k$ represents a scheduling priority of a $k^{th}$ UE, $C_k(t)$ represents a theoretical data rate of the $k^{th}$ UE at a moment $t$, $T_k(t)$ represents a history throughput of the $k^{th}$ UE accumulated at the moment $t$, and $f(buffer)$ represents an amount of data in a data buffer of the $k^{th}$ UE.

The method and device for scheduling the HSDPA resource of the present disclosure will be introduced in details below in combination with specific embodiments.

At present, a factor of an amount of data in a to-be-scheduled data buffer of UE in a NodeB is not considered in calculation of a scheduling priority. Considering a condition that it is necessary to improve a scheduling priority of a service with a large amount of data in a commercial network in practice, the amount of the data in the data buffer may be added in a formula for calculating the scheduling priority, thus better adjusting the scheduling priority of a service with a large amount of data and a service with a small amount of data, so that it is more possible to schedule a user of the service with a large amount of data, thereby improving service experience of the user of the service with a large amount of data and finally achieving an objective of balancing a throughput and real-time fairness of the user.

The method for scheduling the HSDPA resource of the present disclosure includes the following steps.

Step 1: An information acquiring component acquires a CQI reported by a UE, and calculates a theoretical data rate of the UE according to the CQI and a terminal capability of the UE, and so on, and normalizes a calculating result into a weight value between 0 and 1000.

Step 2: The information acquiring component acquires a history throughput of the UE, and normalizes the obtained history throughput into a weight value between 0 and 100.

Step 3: The information acquiring component acquires an amount of data of a to-be-scheduled data buffer of the UE, and normalizes the acquired amount of the data into a weight value between 0 and 100.

A method for calculating a weight value will be described below by taking the amount of the data in the data buffer as an example.

The weight value may be calculated by a subsection mapping method, but is not limited thereto, and the weight value may be also calculated by using other methods, such as a method of taking a logarithm.

When the weight value of the amount of the data in the data buffer is calculated by the subsection mapping method, specifically, a data amount of [0,20k) may be mapped as 1, a data amount of [20k,100k) may be mapped as 10, a data amount of [100k,300k) may be mapped as 15, and a data amount of [300k,+inf) may be mapped as 20, thereby ensuring that a mapped weight value of data amounts in a certain section is unchanged, while a user with a large amount of data is mapped to a large weight value so that the amount of the data of the buffer area is finally reflected on a formula for calculating a scheduling priority. A mapped weight value in a data buffer of a user of a service with a large amount of data such as an FTP downloading is 20, and thus the user has a relatively high scheduling priority.

Step 4: A scheduling priority calculating component calculates a scheduling priority P of the UE according to the weight values by using a formula for calculating the scheduling priority:

$$P_k = \frac{C_k(t)}{T_k(t)} * f(buffer) \, ,$$

where $P_k$ represents a scheduling priority of a $k^{th}$ UE, $C_k(t)$ represents a data rate (which may be considered as a theoretical calculated rate) that may be reached by the $k^{th}$ UE at a moment $t$, and is mainly determined by a CQI, $T_k(t)$ represents a history throughput of the $k^{th}$ UE accumulated at the moment $t$, and $f(buffer)$ represents an amount of data in a data buffer of the UE.

Step 5: A resource allocating component performs resource allocation according to the calculated scheduling priority and schedules the UE.

The present disclosure adds the amount of the data of the to-be-scheduled data buffer of the UE of the NodeB as a weight factor into the formula for calculating a scheduling priority. When a base station schedules users, a scheduling priority of each user is calculated according to a CQI reported by the user, a history throughput, and an amount of data in the to-be-scheduled data buffer of the UE, and the user is scheduled according to the scheduling priority. A real time change of the amount of the data in the data buffer may be well reflected by a real time change of the scheduling priority. The more data in the to-be-scheduled data buffer of a certain UE is, it is indicated that the more the UE expects to be scheduled. The technical solution of the present disclosure may greatly improve a scheduling priority of a service with a large amount of data, and improve a download rate of the service with a large amount of data without changing experience of a service with a small amount of data in high and moderate loads when there is a large number of users, thereby improving experience of the user with a large amount of data, improving a data throughput of a cell while maintaining real-time fairness of a service.

## Industrial Applicability

A scheduling priority of UE is calculated according to weight values of three parameters of the UE, namely a theoretical data rate, a history throughput, and an amount of data in a data buffer of the UE in the embodiments of the present disclosure, thus scheduling priorities of a service with a large amount of data and a service with a small amount of data may be better adjusted so that it is more possible to schedule a user of the service with a large amount of data, thereby improving service experience of the user of the service with a large amount of data and finally achieving an objective of balancing a throughput and real-time fairness of the user.

The above are preferred embodiments of the present disclosure.

## Claims

1. A method for scheduling a High Speed Downlink Packet Access, HSDPA, resource, comprising:

   respectively acquiring (101) weight values of three parameters of User Equipment, UE, wherein the three parameters are a theoretical data rate, a history throughput, and an amount of data in a data buffer;
   calculating (102) a scheduling priority of the UE according to the weight values of the three parameters; and
   scheduling (103) the UE according to the scheduling priority of the UE;
   wherein calculating (102) the scheduling priority of the UE according to the weight values of the three parameters comprises:
   calculating the scheduling priority P of the UE according to the weight values of the three parameters by using a following formula:

   $$P_k = \frac{C_k(t)}{T_k(t)} * f(buffer),$$

   where $P_k$ represents a scheduling priority of a $k^{th}$ UE, $C_k(t)$ represents a theoretical data rate of the $k^{th}$ UE at a moment $t$, $T_k(t)$ represents a history throughput of the $k^{th}$ UE accumulated at the moment $t$, and $f(buffer)$ represents an amount of data in a data buffer of the $k^{th}$ UE.

2. The method for scheduling the HSDPA resource as claimed in claim 1, wherein respectively acquiring the weight values of the three parameters of the UE, wherein the three parameters are the theoretical data rate, the history throughput, and the amount of the data in the data buffer (101) comprises:
acquiring a Channel Quality Indicator, CQI, reported by the UE; calculating the theoretical data rate of the UE according to the CQI and a terminal capability of the UE; and normalizing the calculated theoretical data rate into a weight value between 0 and 1000.

3. The method for scheduling the HSDPA resource as claimed in claim 1, wherein respectively acquiring (101) the weight values of the three parameters of the UE, wherein the three parameters are the theoretical data rate, the history throughput, and the amount of the data in the data buffer comprises:
acquiring the history throughput of the UE; and normalizing the history throughput into a weight value between 0 and 100.

4. The method for scheduling the HSDPA resource as claimed in claim 1, wherein respectively acquiring (101) the weight values of the three parameters of the UE, wherein the three parameters are the theoretical data rate, the history throughput, and the amount of the data in the data buffer comprises:
acquiring an amount of data of a to-be-scheduled data buffer of the UE; and normalizing the amount of the data into a weight value between 0 and 100.

5. A device for scheduling a High Speed Downlink Packet Access, HSDPA, resource, comprising:

   an information acquiring component, configured to respectively acquire weight values of three parameters of User Equipment, UE, wherein the three parameters are a theoretical data rate, a history throughput, and an amount of data in a data buffer;
   a scheduling priority calculating component, configured to calculate a scheduling priority of the UE according to the weight values of the three parameters; and
   a resource allocating component, configured to schedule the UE according to the scheduling priority of the UE;
   wherein the scheduling prioriting calculating component is configured to calculate the scheduling priority P of the UE according to the weight values of the three parameters by using a following formula:

   $$P_k = \frac{C_k(t)}{T_k(t)} * f(buffer),$$

   where $P_k$ represents a scheduling priority of a $k^{th}$ UE, $C_k(t)$ represents a theoretical data rate of the $k^{th}$ UE at a moment $t$, $T_k(t)$ represents a

history throughput of the $k^{th}$ UE accumulated at the moment $t$, and $f(buffer)$ represents an amount of data in a data buffer of the $k^{th}$ UE.

**6.** The device for scheduling a High Speed Downlink Packet Access, HSDPA, resource as claimed in claim 5, wherein the information acquiring component comprises:
a first acquiring sub-component, configured to acquire a Channel Quality Indicator, CQI, reported by the UE; calculate the theoretical data rate of the UE according to the CQI and a terminal capability of the UE; and normalize the calculated theoretical data rate into a weight value between 0 and 1000.

**7.** The device for scheduling a High Speed Downlink Packet Access, HSDPA, resource as claimed in claim 5, wherein the information acquiring component comprises:
a second acquiring sub-component, configured to acquire the history throughput of the UE; and normalize the history throughput into a weight value between 0 and 100.

**8.** The device for scheduling a High Speed Downlink Packet Access, HSDPA, resource as claimed in claim 5, wherein the information acquiring component comprises:
a third acquiring sub-component, configured to acquire an amount of data of a to-be-scheduled data buffer of the UE; and normalize the amount of the data into a weight value between 0 and 100.

**Patentansprüche**

**1.** Verfahren zum Planen einer High Speed Downlink Packet Access-Ressource, HSDPA-Ressource, die umfasst:

jeweils Erheben (101) von Gewichtungswerten von drei Parametern von Benutzergeräten, UE, wobei die drei Parameter eine theoretische Datenrate, ein Historiedurchsatz und eine Datenmenge in einem Datenpuffer sind;
Berechnen (102) einer Planungspriorität des UE gemäß den Gewichtungswerten der drei Parameter; und
Planen (103) des UE gemäß der Planungspriorität des UE;
wobei das Berechnen (102) der Planungspriorität des UE gemäß den Gewichtungswerten der drei Parameter umfasst:
Berechnen der Planungspriorität $P$ des UE gemäß den Gewichtungswerten der drei Parameter unter Verwenden einer folgenden Formel:

$$P_k = \frac{C_k(t)}{T_k(t)} * f(Puffer),$$

wobei $P_k$ eine Planungspriorität eines $k^{ten}$ UE darstellt, $C_k(t)$ eine theoretische Datenrate des $k^{ten}$ UE zu einem Zeitpunkt $t$ darstellt, $T_k(t)$ einen Historiedurchsatz des $k^{ten}$ UE darstellt, der an dem $k^{ten}$ UE zum Zeitpunkt $t$ aufgelaufen ist, und $f(Puffer)$ eine Datenmenge in einem Datenpuffer des $k^{ten}$ UE darstellt.

**2.** Verfahren zum Planen der HSDPA-Ressource nach Anspruch 1, wobei das jeweilige Erheben der Gewichtungswerte der drei Parameter des UE, wobei die drei Parameter die theoretische Datenrate, der Historiedurchsatz und die Menge der Daten in dem Datenpuffer (101) sind, umfasst:
Erheben eines durch das UE gemeldeten Kanalqualitätsindikators, CQI; Berechnen der theoretischen Datenrate des UE gemäß dem CQI und einer Endgerätefähigkeit des UE; und Normieren der berechneten theoretischen Datenrate in einen Gewichtungswert zwischen 0 und 1000.

**3.** Verfahren zum Planen der HSDPA-Ressource nach Anspruch 1, wobei das jeweilige Erheben (101) der Gewichtungswerte der drei Parameter des UE, wobei die drei Parameter die theoretische Datenrate, der Historiedurchsatz und die Datenmenge in dem Datenpuffer sind, umfasst:
Erheben des Historiedurchsatzes des UE; und Normieren des Historiedurchsatzes auf einen Gewichtungswert zwischen 0 und 100.

**4.** Verfahren zum Planen der HSDPA-Ressource nach Anspruch 1, wobei das jeweilige Erheben (101) der Gewichtungswerte der drei Parameter des UE, wobei die drei Parameter die theoretische Datenrate, der Historiedurchsatz und die Datenmenge in dem Datenpuffer sind, umfasst:
Erheben einer Datenmenge eines zu planenden Datenpuffers des UE; und Normieren der Menge der Daten auf einen Gewichtungswert zwischen 0 und 100.

**5.** Vorrichtung zum Planen einer HSDPA-Ressource, die umfasst:

eine Informationserhebungskomponente, die dazu konfiguriert ist, jeweils Gewichtungswerte von drei Parametern des Benutzergeräts, UE zu erheben, wobei die drei Parameter eine theoretische Datenrate, ein Historiedurchsatz und eine Datenmenge in einem Datenpuffer sind;
eine Planungsprioritäts-Berechnungskomponente, die dazu konfiguriert ist, eine Planungspriorität des UE gemäß den Gewichtungswerten der drei Parameter zu berechnen; und
eine Ressourcenzuweisungskomponente, die dazu konfiguriert ist, das UE gemäß der Planungspriorität des UE zu planen;
wobei die Planungsprioritäts-Berechnungskomponente dazu konfiguriert ist, die Planungspriorität *P* des UE gemäß den Gewichtungswerten der drei Parameter unter Verwenden einer folgenden Formel zu berechnen:

$$P_k = \frac{C_k(t)}{T_k(t)} * f(Puffer),$$

wobei $P_k$ eine Planungspriorität eines $k^{ten}$ UE darstellt, $C_k(t)$ eine theoretische Datenrate des $k^{ten}$ UE zu einem Zeitpunkt *t* darstellt, $T_k(t)$ einen Historiedurchsatz des $k^{ten}$ UE darstellt, der an dem $k^{ten}$ UE zum Zeitpunkt *t* aufgelaufen ist, und *f(Puffer)* eine Datenmenge in einem Datenpuffer des $k^{ten}$ UE darstellt.

6. Vorrichtung zum Planen einer High Speed Downlink Packet Access-Ressource, HSDPA-Ressource, nach Anspruch 5, wobei die Informationserhebungskomponente umfasst:
   eine erste Erhebungsteilkomponente, die dazu konfiguriert ist, einen Kanalqualitätsindikator, CQI, durch das UE gemeldet wird, zu erheben; die theoretische Datenrate des UE gemäß dem CQI und einer Endgerätefähigkeit des UE zu berechnen; und die berechnete theoretische Datenrate auf einen Gewichtungswert zwischen 0 und 1000 zu normieren.

7. Vorrichtung zum Planen einer High Speed Downlink Packet Access-Ressource, HSDPA-Ressource, nach Anspruch 5, wobei die Informationserhebungskomponente umfasst:
   eine zweite Erhebungsteilkomponente, die dazu konfiguriert ist, den Historiedurchsatz des UE zu erheben; und den Historiedurchsatz auf einen Gewichtungswert zwischen 0 und 100 zu normieren.

8. Vorrichtung zum Planen einer High Speed Downlink Packet Access-Ressource, HSDPA-Ressource, nach Anspruch 5, wobei die Informationserhebungskomponente umfasst:
   eine dritte Erhebungsteilkomponente, die dazu konfiguriert ist, eine Datenmenge eines zu planenden Datenpuffers des UE zu erheben; und die Datenmenge auf einen Gewichtungswert zwischen 0 und 100 zu normieren.

**Revendications**

1. Procédé de planification d'une ressource d'accès par paquets en liaison descendante à haut débit, HSDPA, comprenant :

   l'acquisition (101) respectivement de valeurs de pondération de trois paramètres d'équipement utilisateur, UE, dans lequel les trois paramètres sont un taux de données théorique, un débit d'historique et une quantité de données dans un tampon de données ;
   le calcul (102) d'une priorité de planification de l'UE en fonction des valeurs de pondération des trois paramètres ; et
   la planification (103) de l'UE selon la priorité de planification de l'UE ;
   dans lequel le calcul (102) de la priorité de planification de l'UE en fonction des valeurs de pondération des trois paramètres comprend :
   le calcul de la priorité de planification *P* de l'UE en fonction des valeurs de pondération des trois paramètres à l'aide d'une formule suivante :

$$P_k = \frac{C_k(t)}{T_k(t)} * f(buffer),$$

   où $P_k$ représente une priorité de planification d'un $k^e$ UE, $C_k(t)$ représente un taux de données théorique du $k^e$ UE à un instant *t*, $T_k(t)$ représente un débit d'historique du $k^e$ UE accumulé à l'instant *t* et *f(buffer)* représente une quantité de données dans un tampon de données du $k^e$ UE.

2. Procédé de planification de la ressource HSDPA selon la revendication 1, dans lequel l'acquisition respectivement des valeurs de pondération des trois paramètres de l'UE, dans lequel les trois paramètres sont le taux de données théorique, le débit d'historique et la quantité de données dans le tampon de données (101), comprend :
   l'acquisition d'un indicateur de qualité de canal, CQI, rapporté par l'UE ; le calcul du taux de données théorique de l'UE selon le CQI et une capacité de terminal de l'UE ; et la normalisation du taux de données théorique calculé en une valeur de pondération entre 0 et 1000.

3. Procédé de planification de la ressource HSDPA selon la revendication 1, dans lequel l'acquisition (101) respectivement des valeurs de pondération des trois paramètres de l'UE, dans lequel les trois paramètres sont le taux de données théorique, le débit d'historique et la quantité de données dans le tampon de données, comprend :
   l'acquisition du débit d'historique de l'UE ; et la normalisation du débit d'historique en une valeur de pondération entre 0 et 100.

4. Procédé de planification de la ressource HSDPA selon la revendication 1, dans lequel l'acquisition (101) respectivement des valeurs de pondération des trois paramètres de l'UE, dans lequel les trois paramètres sont le taux de données théorique, le débit d'historique et la quantité de données dans le tampon de données, comprend :
l'acquisition d'une quantité de données d'un tampon de données à planifier de l'UE ; et la normalisation de la quantité de données en une valeur de pondération entre 0 et 100.

5. Dispositif pour planifier une ressource d'accès par paquets en liaison descendante à haut débit, HSDPA, comprenant :

   un composant d'acquisition d'informations, configuré pour acquérir respectivement des valeurs de pondération de trois paramètres d'équipement utilisateur, UE, dans lequel les trois paramètres sont un taux de données théorique, un débit d'historique et une quantité de données dans un tampon de données ;
   un composant de calcul de priorité de planification, configuré pour calculer une priorité de planification de l'UE en fonction des valeurs de pondération des trois paramètres ; et
   un composant d'allocation de ressources, configuré pour planifier l'UE en fonction de la priorité de planification de l'UE ;
   dans lequel le composant de calcul de priorisation de planification est configuré pour calculer la priorité de planification P de l'UE en fonction des valeurs de pondération des trois paramètres à l'aide d'une formule suivante :

   $$P_k = \frac{C_k(t)}{T_k(t)} * f(buffer),$$

   où $P_k$ représente une priorité de planification d'un $k^e$ UE, $C_k(t)$ représente un taux de données théorique du $k^e$ UE à un instant $t$, $T_k(t)$ représente un débit d'historique du $k^e$ UE accumulé à l'instant $t$ et $f(buffer)$ représente une quantité de données dans un tampon de données du $k^e$ UE.

6. Dispositif pour planifier une ressource d'accès par paquets en liaison descendante à haut débit, HSDPA, selon la revendication 5, dans lequel le composant d'acquisition d'informations comprend :
un premier sous-composant d'acquisition, configuré pour acquérir un indicateur de qualité de canal, CQI, rapporté par l'UE ; calculer le taux de données théorique de l'UE selon le CQI et une capacité de terminal de l'UE ; et normaliser le taux de données théorique calculé en une valeur de pondération entre 0 et 1000.

7. Dispositif pour planifier une ressource d'accès par paquets en liaison descendante à haut débit, HSDPA, selon la revendication 5, dans lequel le composant d'acquisition d'informations comprend :
un deuxième sous-composant d'acquisition, configuré pour acquérir le débit d'historique de l'UE ; et normaliser le débit d'historique en une valeur de pondération entre 0 et 100.

8. Dispositif pour planifier une ressource d'accès par paquets en liaison descendante à haut débit, HSDPA, selon la revendication 5, dans lequel le composant d'acquisition d'informations comprend :
un troisième sous-composant d'acquisition, configuré pour acquérir une quantité de données d'un tampon de données à planifier de l'UE ; et normaliser la quantité de données en une valeur de pondération entre 0 et 100.

Weight values of three parameters of a UE are acquired respectively, wherein the three parameters are a theoretical data rate, a history throughput, and an amount of data in a data buffer
101

A scheduling priority of the UE is calculated according to the weight values of the three parameters
102

The UE is scheduled according to the scheduling priority of the UE
103

**Fig. 1**

Information acquiring component → Scheduling priority calculating component → Resource allocating component

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- QoS-Aware LTE Downlink Scheduler for VoIP with Power Saving. **SAJID MUSHTAQ M et al.** COMPUTATIONAL SCIENCE AND ENGINEERING (CSE), 2012 IEEE 15TH INTERNATIONAL CONFERENCE ON. IEEE, 05 December 2012

- A novel multi-service scheduling scheme for e-utra. **BIN CHEN et al.** INTERNET, 2007. ICI 2007. 3RD IEEE/IFIP INTERNATIONAL CONFERENCE IN CENTRAL ASIA ON. IEEE, 01 September 2007